**Europäisches Patentamt**

**European Patent Office**

**Office européen des brevets**

(19)

(11) Veröffentlichungsnummer: **0 140 071 B1**

(12) **EUROPÄISCHE PATENTSCHRIFT**

(45) Veröffentlichungstag der Patentschrift: **07.01.88**

(51) Int. Cl.⁴: **H 04 N 1/46**

(21) Anmeldenummer: **84110735.2**

(22) Anmeldetag: **08.09.84**

(54) **Einrichtung zur Farbbildkontrolle auf einem Farbmonitor.**

(30) Priorität: **10.09.83 DE 3332791**

(43) Veröffentlichungstag der Anmeldung:
**08.05.85 Patentblatt 85/19**

(45) Bekanntmachung des Hinweises auf die Patenterteilung:
**07.01.88 Patentblatt 88/1**

(84) Benannte Vertragsstaaten:
**CH FR GB IT LI**

(56) Entgegenhaltungen:
**WO - A - 80/02607
DE - A - 2 607 623
GB - A - 2 077 548**

(73) Patentinhaber: **DR.-ING. RUDOLF HELL GmbH,
Grenzstrasse 1-5, D-2300 Kiel 14 (DE)**

(72) Erfinder: **Colditz, Armin, Am Rosensee 3,
D-2301 Raisdorf (DE)**
Erfinder: **Klopsch, Siegfried, Steinkamp 2,
D-2316 Probsteierhagen (DE)**

**Beschreibung**

Die vorliegende Erfindung betrifft eine Einrichtung zur Farbbildkontrolle bzw. Korrektur auf einem Farbmonitor gemäss dem Oberbegriff des Patentanspruchs 1.

Es ist bereits in dem Dokument WO-A-80/02607 ein Verfahren und eine Schaltungsanordnung zur partiellen elektronischen Retusche bei der Farbbildreproduktion bekannt, wobei die Farbbildkontrolle auf einem Farbmonitor durchgeführt wird. Es soll das Ergebnis einer elektronischen Farbretusche bei der Reproduktion von Farbbildern sichtbar gemacht werden, um beurteilen zu können, ob die mit Hilfe einer Koordinaten-Markiervorrichtung durchgeführten lokalen Korrekturen das gewünschte Resultat zeigen. Hierbei ist es von Vorteil, dass mit Hilfe der Markiervorrichtung die Korrektur so oft wiederholt werden kann, bis das gewünschte Resultat getroffen ist, es fehlt aber eine Vergleichsmöglichkeit mit Referenzfarben, so dass die Korrektur qualitativ nur vom subjektiven Eindruck des Operators abhängt.

Das Dokument GB-A-2 077 548 zeigt ein Gerät zur Simulierung eines Farbdruckprozesses, das einen Farbmonitor aufweist. Es ist ein Cursor vorhanden, um einen Messpunkt oder Bereich auf dem Bildschirm des Monitors zu definieren. Um den Cursor klar von dem übrigen Teil des Monitors zu unterscheiden, wird der Cursor «weiss» dargestellt. Auch hier kann die Beurteilung nur subjektiv vom Operator durchgeführt werden, da eine Vergleichsmöglichkeit mit Referenzfarben auf dem Monitor fehlt.

Es ist weiterhin durch die deutsche DE-A-2 607 623 ein Farbsichtgerät bekannt, mit dem ein zu druckendes Bild vor dem Druck dargestellt, korrigiert und beurteilt werden kann. Mit diesem Gerät können umfangreiche Bildkorrekturen vorgenommen werden, und es wird erreicht, dass das auf dem Farbmonitor dargestellte und eventuell korrigierte Bild dem endgültigen Druckresultat, d.h. dem Bild, wie es später im Druck erscheint, möglichst nahe kommt. Hierbei ist eine objektive Bildbeurteilung erforderlich. Diese ist nur möglich, wenn die Bedienungsperson zusätzlich zu dem mehr oder weniger subjektiven visuellen Bildeindruck Möglichkeiten hat, die hier verbindliche reproduzierbare Aussagen gestattet. Ein solches Mittel ist zum Beispiel das Messen der Farben, was auch in GB-A-2 077 548 angegeben ist. Dabei fährt man den in das Bild eingeblendeten Cursor auf das zu messende Bilddetail und liest zum Beispiel an einem Messinstrument die entsprechenden Farbwerte ab oder blendet, was in der Praxis häufig geschieht, diese Farbwerte am Bildrand ein. Für diese Farbwerte kann dann in einem Farbatlas die entsprechende Druckfarbe bestimmt werden, und diese Referenzfarbe wird mit dem Bildschirm verglichen. Diese Methode ist nicht optimal, da sie zeitaufwendig und nicht sicher in der Beurteilung ist, denn bei grösserem Abstand zwischen zu beurteilenden bzw. vergleichenden Farben wird das Auge unempfindlich.

Ausserdem können Fehler durch ungünstige Beleuchtung und ein farbiges Umfeld der zu beurteilenden Farbe auftreten.

Es ist weiterhin bekannt, bei der Beurteilung von Farbbildern am Bildrand Referenzfarben auf dem Farbmonitor sichtbar zu machen. Auch diese Art der Beurteilung ist noch fehlerhaft, da der Farbeindruck des zu beurteilenden Bildpunktes oder der zu beurteilenden Bildpartie von den Umgebungsfarben beeinflusst wird und ein Abstand zu den Farbreferenzfeldern besteht.

Der vorliegenden Erfindung liegt daher die Aufgabe zugrunde, eine Einrichtung anzugeben, mit der eine noch bessere Beurteilung der Farben im Bild ermöglicht wird.

Die Erfindung erreicht dies durch die im kennzeichnenden Teil des Anspruchs 1 angegebenen Merkmale. Vorteilhafte Weiterbildungen sind in den Unteransprüchen 2–4 beschrieben.

Die Erfindung wird im folgenden anhand der Figuren näher erläutert.

Es zeigen:

Figur 1 ein Prinzipschaltbild der Einrichtung,

Figur 2 eine Darstellung der Richtungs-Koordinaten, die mittels eines «Trackball» erzeugt werden,

Figur 3 eine Darstellung eines Referenzfarbfeldes auf dem Monitorschirm,

Figur 4 eine Schaltung zur Ansteuerung des RAM-Steuerwerks,

Figur 5 eine Speicherfüllung für das Beispiel der Figur 2,

Figur 6 ein Beispiel für den Speicher des RAM-Steuerwerks und

Figur 7 ein Taktschema für den RAM-Speicher.

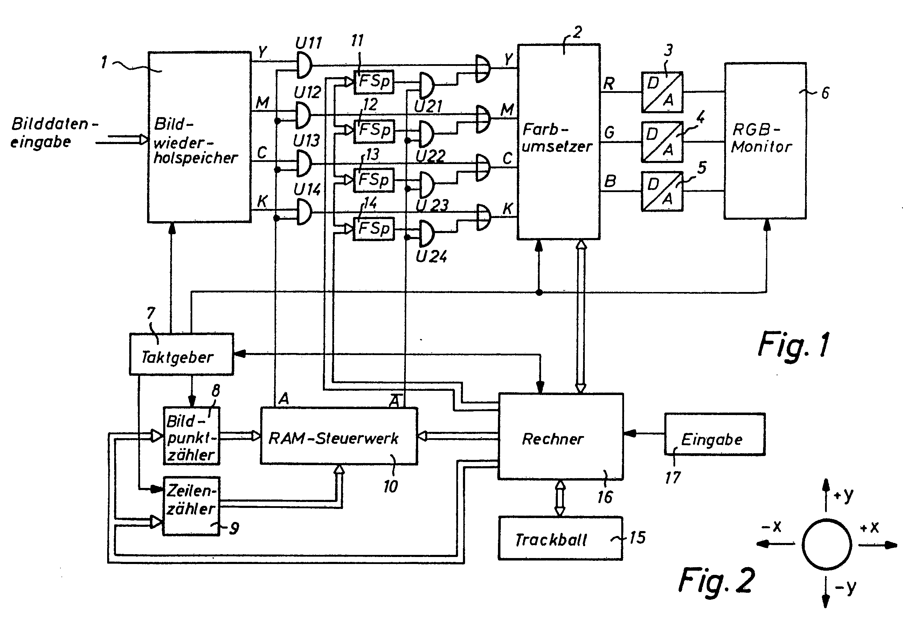

In der Figur 1 ist ein Bildwiederholspeicher (1) vorgesehen, der eine Bilddateneingabe aufweist, durch die in einem vorangegangenen Prozess mittels eines Scanners ermittelte Druckfarbensignale des darzustellenden Bildes eingegeben werden. Die Bildabtastung mittels solcher Scanner ist allgemeiner Stand der Technik. Es wird in diesem Zusammenhang auf den Scanner Type DC 300 der Firma Dr.-Ing. Rudolf Hell GmbH, Kiel, Deutschland, verwiesen. Dieser Scanner ist weltweit bereits lange vor dem Anmeldetag im Einsatz, siehe z.B. Druckschrift der Firma Dr.-Ing. Rudolf Hell GmbH, «Chromagraph DC 300», Nr. 300-8-7703 (984) von 1977 oder DE-PS 2 107 738 bzw. US-PS 3 725 574. Die mittels dieses Scanners erzeugten Bildsignale sind in den üblichen für die Bildsignale verwendeten Codes digitalisiert. Diese Codierung ist aber für die im folgenden beschriebene Bilddarstellung nicht von entscheidender Bedeutung; für die weitere Verarbeitung dieser digitalen Bildsignale ist lediglich erforderlich, dass jedem Bildpunkt ein digitaler Bildsignalwert und eine der jeweiligen Abtastposition entsprechende Adresse zugeordnet sind.

Diese Bildsignale sind, wie bereits erwähnt, digitalisiert und laufen im Normalfall vom Bildwiederholspeicher über vier Signalwege für die Druckfarben Y, M C und K zu einem Farbumsetzer (2), der den Druckprozess simuliert. Der Farbumsetzer (2) erzeugt aus den Druckfarbensignalen Y, M, C und K Dreifarbensignale R, G, B, die über Digitalanalogwandler (3, 4 und 5) an einen Farbmonitor (6) gelangen. Weiterhin sind im Signalweg zwischen Bildwiederholspeicher (1) und Farbumsetzer (2) Tore $U_{11}$, $U_{12}$, $U_{13}$ und $U_{14}$ vorgesehen, mittels der die Signale des Bildwiederholspeichers (1) an den Farbumsetzer (2) durchgeschaltet werden können. Der Bildwiederholspeicher (1) erzeugt in Synchronismus mit der Bildfrequenz des Monitors (6) Ausgangssignale Y, M, C, K, die nach Durchlaufen des Farbumsetzers (2) als stehendes Bild auf dem Monitor (6) erscheinen. Bildwiederholspeicher (1), Farbumsetzer (2) und Monitor (6) sind mit einem gemeinsamen Taktgeber (7) verbunden, welcher die Takte für das Auslesen des Wiederholspeichers (1), für das Durchschleusen der Bildsignalwerte durch den Farbumsetzer (2) und für die Monitorsteuerung, d.h. die entsprechenden Synchronisationssignale erzeugt. Mit dem Taktgeber (7) ist ein Bildpunktzähler (8) verbunden, in dem jeweils vom Start einer Zeile an die Bildpunkte der Zeile gezählt werden. Ausserdem ist ein Zeilenzähler (9) mit dem Taktgeber (7) verbunden, welcher für jedes ausgelesene Bild die Anzahl der jeweils ausgelesenen Zeilen mitzählt. Diese Zähler sind über eine Vielfachleitung mit dem Rechner (16) verbunden, über die die Zähler vom Rechner (16) aus gesetzt werden können. Bildpunktzähler (8) und Zeilenzähler (9) sind ausserdem mit einem Steuerwerk (10) verbunden, welches zwei Ausgänge A und $\overline{A}$ aufweist. Der Ausgang A ist mit den Toren $U_{11}$–$U_{14}$ verbunden. Auf dem Farbmonitor (6) wird das Farbbild sichtbar, wenn die Und-Tore $U_{11}$–$U_{14}$ durch das Steuersignal A durchgeschaltet sind, d.h. wenn dieses Steuersignal auf H liegt.

Es sind weiterhin vier Farbspeicher (11, 12, 13 und 14) vorgesehen, welche über Tore $U_{21}$, $U_{22}$, $U_{23}$ und $U_{24}$ mit dem Farbumsetzereingang verbunden sind. Diese Tore $U_{21}$–$U_{24}$ sind mit dem Ausgang $\overline{A}$ des Steuerwerks (10) verbunden. Im Fall, dass das Steuersignal auf dem Ausgang A auf L umschaltet, werden die Tore $U_{11}$–$U_{14}$ gesperrt, d.h. die Bildinformation, die vom Bildwiederholspeicher kommt, wird unterdrückt. Da auf der Leitung $\overline{A}$ das entsprechende inverse Signal liegt, sind die Und-Tore $U_{21}$–$U_{24}$ infolge des an ihnen anliegenden $\overline{A}$-Signals leitend, so dass die in den Farbspeichern (11–14) befindlichen Farbinformationen an den Farbumsetzer (2) und damit auf den Monitor (6) gelangen. Weiterhin ist ein Gerät zur Koordinatenvorgabe (15) vorgesehen, das eine Koordinaten-Erfassungseinrichtung (Trackball) aufweist, der über die Fläche des Monitors (6) bewegbar ist. Hierbei werden die durch die Koordinaten-Erfassungseinrichtung (15) jeweils vorgegebenen Koordinaten ermittelt und bereitgestellt. In Figur 2 sind die Koordinaten dargestellt, die mit der Koordinaten-Erfassungseinrichtung (15) der Figur 1 erzeugt werden. Solche Koordinaten-Erfassungseinrichtungen sind allgemein bekannt und käuflich erhältlich, z.B. «Trackball», Type TBS II-500-ALD-5-1 der Fa. Litton, USA. Diese Einrichtung hat 4 Signalausgänge +x, −x, +y, −y, wie in Figur 2 dargestellt.

Je nach Drehrichtung der Kugel des Trackballs erhält man an diesen Signalausgängen Impulse. Bei Drehung in Diagonalrichtung erhält man an den entsprechenden zwei Signalausgängen gleichzeitig Impulse. Die Anzahl der Impulse ist proportional zum Drehwinkel und die Impulsfolgefrequenz proportional der Drehgeschwindigkeit.

Über das Steuerwerk (10) der Figur 1 kann in Verbindung mit den beiden Zählern (8 und 9) für die Bildpunkte und Bildzeilen die Steuerung der Tore $U_{11}$–$U_{14}$ sowie der Tore $U_{21}$–$U_{24}$ so erfolgen, dass auf dem Bildschirm in Abhängigkeit von der jeweils durch die Koordinaten-Erfassungseinrichtung angegebenen Koordinaten in einem Bereich um diese Koordinate die in den Farbspeichern (11–14) befindlichen Farbsignale auf dem Monitor (6) dargestellt werden.

Ausserhalb dieses Bereiches wird die im Bildwiederholspeicher (1) abgespeicherte und von diesem ausgegebene Information dargestellt.

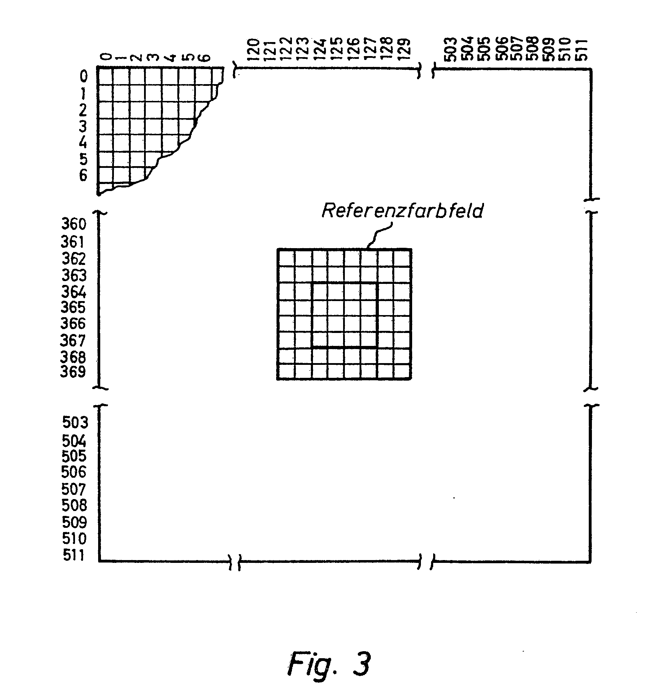

Figur 3 zeigt ein Beispiel für ein solches Referenzfarbfeld auf dem Monitor (6) der Figur 1. Der Bildschirm möge eine Auflösung von 512×512 Bildpunkten haben. In diesem Falle weist auch der Bildwiederholspeicher (1) die entsprechende Auflösung, d.h. 512×512 Speicherplätze bzw. 512 X-Adressen und 512 Y-Adressen auf. Das Referenzfarbfeld ist in diesem Beispiel ein Rahmen. Im Inneren des Rahmens erscheint wieder das Bild. Der Rahmen kann auch breiter und das Farbfeld grösser sein. Hier ist die Grösse nur für das Verständnis klein dargestellt. Im Bereich der schraffierten Fläche wird die Referenzfarbe dargestellt. In Figur 1 ist weiterhin ein Rechner (16) mit einer Eingabeeinheit (17) vorgesehen, welcher mit dem Steuerwerk (10), der Koordinaten-Erfassüngseinrichtung (15), den Zählern (8) und (9) sowie den Farbspeichern (11–14) und dem Farbumsetzer (2) verbunden ist. Der Rechner (16) ist mit dem Taktgeber (7) gekoppelt, so dass im Synchronismus mit dem Taktsystem der Bilddarstellungseinrichtung entsprechende Befehle vom Rechner (16) gegeben werden können. Die Eingabeeinheit (17) ist für die Eingabe der Referenzfarben sowie der Form des Referenzfarbfeldes vorgesehen. Ausserdem kann mittels des Rechners (16) der Farbumsetzer (2) für andere Druckprozesse umgeschaltet werden.

Als Rechner (16) kann z.B. ein Mikroprozessor vom Typ 8086 der Firma Siemens AG verwendet werden, und das RAM-Steuerwerk (10) kann aus Speichern vom Typ HM 6148 der Firma Hitachi aufgebaut sein. Das RAM-Steuerwerk liefert die Impulse für die Grösse und Form des Referenzfarbfeldes, wie bereits im Zusammenhang mit Figur 3 erwähnt.

Der grundsätzliche Ablauf der Darstellung und Bewegung des Referenzfarbfeldes ist wie folgt:

Zu Beginn sind die Referenzfarbspeicher (11–14) und das RAM-Steuerwerk (10) mit einer Standardfüllung versehen. Ebenso haben die Bildpunkt- und Zeilenzähler (8, 9) Startzahlen erhalten.

Der Operator nimmt folgende Operationen vor:
a) Das Referenzfarbfeld ein- und ausschalten.
b) Die Form und Grösse des Referenzfarbfeldes wählen. Entsprechend wird das RAM-Steuerwerk geladen.
c) Die Farbe wechseln. Entsprechend werden die Referenzfarbspeicher (11–14) umgeladen.

Mit dem Trackball (15) kann der Operator das Referenzfarbfeld bewegen. Dazu muss der Rechner (16) laufend die Ausgangsimpulse vom Trackball zählen und entsprechend die Zählerstartzahlen additiv oder substraktiv neu berechnen. Nach jedem Bildstart werden diese neuen Zählerstartzahlen in die Register der Zähler geschrieben.

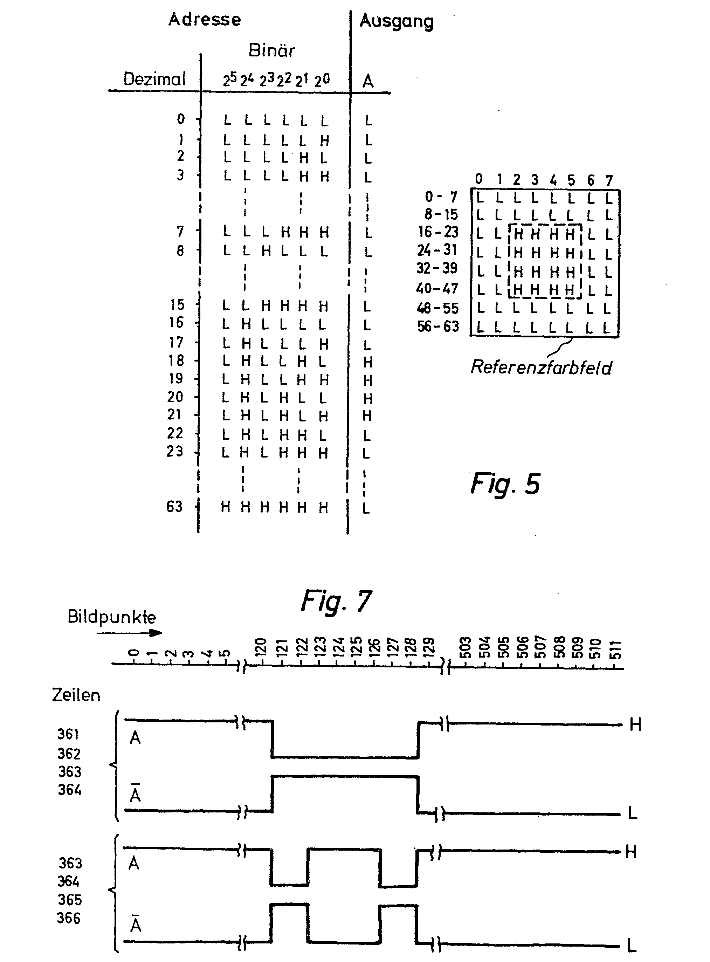

Um nun im Farbbild eine Referenzmarke zu erzeugen, muss man dafür sorgen, dass bei den entsprechenden Bildpunkten, wo die Referenzmarke sichtbar sein soll, das A-Signal des RAM-Steuerwerks LOW-Zustand und $\overline{A}$ HIGH-Zustand hat. Dafür sorgt eine entsprechende Füllung im Speicher des RAM-Steuerwerks (10). Diese Füllung wird vom Rechner (16) dorthin übertragen. Will man die Grösse oder Form des Referenzfarbfeldes ändern, so wird vom Rechner eine entsprechend geänderte Füllung übertragen. In Figur 5 ist ein Beispiel für ein Referenzfarbfeld angegeben, das aus 8×8 Bildpunkten besteht und in der Mitte in einem Feld von 4×4 Bildpunkten das Originalbild enthält. An den Stellen, wo die Referenzfarbe dargestellt werden soll, ist das A-Signal gleich L. Ist das A-Signal gleich H, so wird das Originalfarbbild dargestellt. Diese Referenzmarke ist im rechten Teil der Figur 5 gezeigt, der linke Teil der Figur 5 zeigt die entsprechende Speicherfüllung, die zur Darstellung dieser Marke führt. Diese Speicherfüllung ist in einem Speicher, der in Figur 6 dargestellt ist, abgelegt. Der linke Teil der Figur 5 gibt die Zuordnung der Ausgangswerte des Speichers der Figur 6 zu den entsprechenden Eingangsadressen 0–63 an. An den einzelnen Zeilen der Referenzmarke der Figur 5 sind zusätzlich die Adressen, z.B. 0–7; 8–15; 16–23 ... angegeben, welche die entsprechenden L- und H-Signale dieser Zeile liefern.

In Figur 7 ist das hierzu erforderliche Taktschema des RAM-Steuerwerks (10) angegeben. Ab Bildpunkt 121 ist das A-Signal gleich L und ab Bildpunkt 128 wieder gleich H. Das $\overline{A}$-Signal ist entsprechend invertiert. Diese Signalverläufe des oberen Teils der Figur 7 gelten für die Zeilen 361, 362, 367 und 368 der Figur 3. Im unteren Teil sind die Signalverläufe für die Zeilen 363 bis 366 der Figur 3 angegeben. Ein Vergleich des Referenzfarbfeldes der Figuren 2 und 5 mit diesen Signalverläufen zeigt, dass der obere Signalverlauf für die Zeilen des Referenzfarbfeldes gilt, die nur die Referenzfarbe darstellen und der untere Verlauf den Bereich des Referenzfarbfeldes in der Mitte, wo noch das Farbbild erscheint.

Ausserhalb der Referenzmarke gilt für alle anderen Zeilen:
$\underline{A}$ = const = H
$\overline{A}$ = conts = L
Der Speicher des RAM-Steuerwerks (10) erhält eine Speicherfüllung, die dieses Taktschema erzeugt, wozu der in Figur 6 dargestellte Speicher mit 8×8 bit, d.h. einer Adressenkapazität von 6 bit, dient. Wie bereits erwähnt, stellt der linke Teil der Figur 5 die entsprechende Wahrheitstabelle dar.

In der Praxis ist es oft erwünscht, das Referenzfarbfeld wesentlich grösser auszulegen, wozu dann einfach anstelle des Speichers der Figur 6 ein grösserer Speicher mit entsprechender Füllung gewählt wird, das Prinzip bleibt aber gleich.

Um dieses Referenzfarbfeld im Farbbild zu bewegen, wird ein entsprechender Zählerstand der Zähler (8) und (9) festgelegt und entsprechend der vom Trackball (15) gelieferten Koordinaten geändert. Hierzu sind die Zähler (8) und (9) mit dem RAM-Steuerwerk (10) und dem Rechner (16) verbunden, was aus Figur (1) und Figur (4) ersichtlich ist.

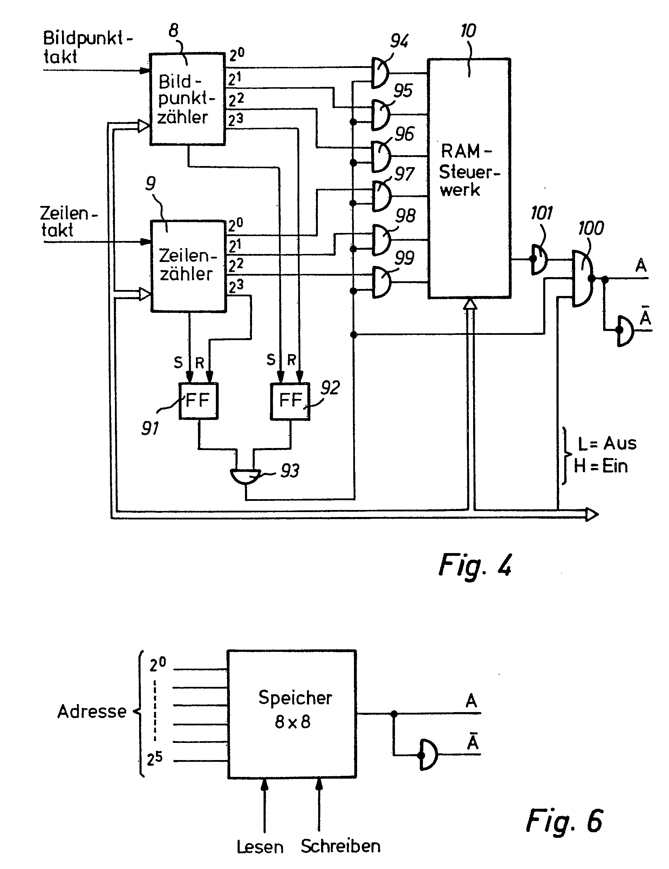

Figur 4 zeigt im einzelnen die Verbindung der Zähler mit dem RAM-Steuerwerk zur Erzeugung der entsprechenden A- und $\overline{A}$-Signale. Den Zählern 8 und 9 sind Flip-Flops 91 und 92 nachgeschaltet, deren Ausgänge auf ein gemeinsames Tor 93 geschaltet sind, dessen Ausgang an ein 6-fach Und-Gatter 94–99 als Schaltleitung geht. Das 6-fach Und-Gatter liegt je zur Hälfte an 3 Ausgangsleitungen $1^0$, $2^1$ und $2^2$ des Zählers 8 und jeweils an drei entsprechenden Ausgangsleitungen $2^0$, $2^1$ und $2^2$ des Zeilenzählers 9. Die jeweils höchste Ausgangsleitung, d.h. $2^3$, liegt jeweils am Flip-Flop 91 bzw. 92. Die Ausgänge der Flip-Flops (91) und (92) steuern nach einer Und-Verknüpfung die Tore (94–99) sowie ein Tor (100), welches drei Eingänge aufweist. Der erste Eingang ist der Ausgang des RAM-Steuerwerks (10), der über einen Inverter (101) angeschlossen ist. Dieser Inverter ist vorgesehen, damit das Ausgangssignal des RAM-Steuerwerks (10) am UND-Tor (100) mit dem richtigen Wert berücksichtigt wird. Der Eingang des Tors (100), der vom Rechner (16) kommt, dient als Ein-Ausschalter für die Funktion «Referenzfarbfeld», d.h. solange dieses Signal auf L-Pegel ist, ist A auf H-Pegel, und das Farbbild ist durchgeschaltet, unabhängig von irgendwelchen Ausgangssignalen des RAM-Steuerwerkes.

Die Tore (94–99) werden nur durchgeschaltet, wenn beide Flip-Flops gesetzt sind, d.h. H sind; entsprechend ist das Tor (100) durchlässig. Es sei noch erwähnt, dass die Zähler (8) und (9) übliche käufliche Bauelemente sind, z.B. Zähler der Type 74 HC 593 der Firma National Semiconductor Corp. Diese Zählerbausteine haben eine Eingangsregister, in das über den Datenbus des Rechners eine Zähler-Startzahl eingeschrieben werden kann. Die Zähler beginnen dann, von dieser Zahl an zu zählen. Sobald die Zähler vollgezählt sind, liefern sie Impulse, mit denen das RAM-Steuerwerk gestartet werden kann. Bei den übrigen Bauelementen der Figur 4 erübrigt sich eine Herstellerangabe, da es sich um handelsübliche Bauelemente vieler Hersteller handelt.

Es wird nun der Funktionsablauf weiter beschrieben. In dem Beispiel der Figuren 3 und 5 beginnt das Referenzfarbfeld bei Bildpunkt 121 und bei Zeile 361. Zu diesem Zeitpunkt stehen die beiden Zähler gerade auf Anfang, d.h. alle Bits sind LOW, was der ersten Adresse des RAM-Steuerwerkes entspricht. Damit die Zähler gerade dann auf LOW stehen, werden sie mit einer Startzahl $511-120=391$ für den Bildpunktzähler und $511-361=150$ für den Zeilenzähler gefüllt. Erreicht ein Zähler die Endstellung, d.h. alle Ausgänge sind auf HIGH, so liefert dieser Zähler an seiner Ausgangsleitung (S) einen Impuls. Dieser setzt ein Flip-Flop. Sind beide Flip-Flops gesetzt, so bedeutet das, dass gerade der letzte Bildpunkt vor dem Start des Referenzfeldes gezählt wurde.

Durch UND-Verknüpfung beider Flip-Flop-Ausgänge wird über ein 6-fach UND-Gatter die Adresse vom Zähler zum RAM-Steuerwerk durchgeschaltet und zusätzlich der Ausgang des RAM-Steuerwerks freigegeben. Vorher war A = const HIGH. Nun wird mit den nächsten 8 Bildpunkten das RAM-Steuerwerk ausgelesen. Wenn die Adresse von HHH auf LLL wechselt, wird der nächst höhere Zählerausgang $(2^3)$ = H und schaltet das Flip-Flop (92) zurück. Damit wird der Ausgang A wieder auf H gesetzt. In der Zeilenrücklaufphase wird der Bildpunktzähler vom Rechner aus erneut und definiert gestartet, so dass der horizontale Zählvorgang erneut startet.

Abgeschlossen wird der Vorgang, wenn auch der Zeilenzähler die Adresse HHH überschreitet und über den Ausgang $2^3$ das Flip-Flop (91) zurücksetzt. Der Vorgang kann jetzt erst wieder mit einem neuen Bildstart beginnen.

Nun werden sich die Zählerstartzahlen von Bild zu Bild ändern, wenn am Trackball (15) gedreht wird, um das Referenzfarbfeld zu verschieben.

Entsprechend der Impulse $+x$ oder $-x$ bzw. $+y$ oder $-y$ der Figur 2 werden die Startzahlen grösser oder kleiner sein, was eine Verschiebung des Referenzfarbfeldes zur Folge hat.

Die Erfindung wird mit Vorteil dann eingesetzt, wenn innerhalb eines Farbbildes eine farbige Bildpartie auf einem bestimmten vorgegebenen Farbwert korrigiert werden soll. Hierzu kann man das Referenzfarbfeld entweder in das Farbfeld setzen und die Korrektur der Farbe solange verändern, bis das Referenzfarbfeld nicht mehr sichtbar ist oder die Referenzmarke unmittelbar neben die zu korrigierende Farbe setzen, so dass ein direkter Vergleich ohne Beeinflussung von anderen Farben möglich ist. Die Korrektur selbst kann mittels der heute auf dem Markt befindlichen Scanner für die Bilddateneingabe in den Bildwiederholspeicher vorgenommen werden, wobei die am Scanner vorhandene Farbkorrektureinrichtung benutzt wird oder auch mittels der Farbkorrektureinrichtung des Farbsichtgerätes selbst, wie es z.B. in der DE-AS 2 607 623 beschrieben ist. Die im Bildwiederholspeicher befindlichen Druckfarbensignale werden dann vom Scanner aus oder von der Korrektureinheit des Farbsichtgerätes direkt geändert. Das Feld der Referenzfarbe kann vorzugsweise quadratisch mit einer Grösse von etwa z.B. $2 \times 2$ cm$^2$ sein. Es kann aber auch jede andere Form und Grösse gewählt werden, z.B., wie bereits erwähnt, als beweglicher Rahmen, der die zu korrigierende Farbe umschliesst. Es ist möglich, mit Hilfe der Eingabeeinrichtung (17) des Rechners (16) verschiedene Referenzfarben mit einer Kennziffer anzuwählen. Hierdurch wird die Bedienung wesentlich vereinfacht, und es kann auch ein Vergleich nebeneinanderliegender Farbproben unterschiedlicher Referenzfarben leicht und schnell durchgeführt werden.

Die Einfärbung des Referenzfeldes kann auch erfindungsgemäss dadurch erfolgen, dass Farbmesswerte, die aus einer zu korrigierenden Bildstelle ermittelt werden, als Farbe in dem Referenzfeld dargestellt werden. Soll z.B. eine kleine Farbfläche auf farbliche Richtigkeit geprüft werden, fährt man diese Stelle mit einem Cursor an, misst die Farbwerte, und mit Hilfe des Rechners ist es möglich, diese Messwerte direkt in die Referenzfarbe umzusetzen, so dass die entsprechende Farbe in dem wesentlich grösseren Referenzfarbfeld sichtbar wird. Diese Zusatzmöglichkeit kann erfindungsgemäss auch dazu benutzt werden, z.B. am unteren Rand des Bildes eine Palette von Referenzfarben bereitzuhalten. Wird dann eines dieser Felder mit der Messmarke angefahren, so kann man das Referenzfarbfeld entsprechend einfärben und hat eine bequemere Farbeingabe für das Referenzfeld als z.B. die Eingabe über die Kennziffer mittels der Eingabeeinrichtung (17).

**Patentansprüche**

1. Einrichtung zur Kontrolle bzw. Korrektur eines zu druckenden Farbbildes auf einem Farbmonitor (6), bestehend aus:

- einem die Druckfarbensignale Y, M, C, K des darzustellenden Bildes enthaltenden Bildwiederholspeicher (1) zur Erzeugung eines stehenden Bildes auf einem Monitor (6),

- einem Farbumsetzer (2), der zwischen Bildwiederholspeicher (1) und Monitor (6) geschaltet ist, um die vier Druckfarbensignale Y, M, C, K in drei Farbensignale R, G, B zur Ansteuerung des Monitors (6) umzuwandeln,

- einem Taktgeber (7) zur Erzeugung von Lesesignalen für den Bildwiederholspeicher (1) und Signalen zur Synchronisation von Bildwiederholspeicher (1), Farbumsetzer (2) und Monitor (6),

- Farbspeichern (11–14), in die frei wählbare Druckfarben als Referenzfarben eingebbar sind, wobei die Farbspeicher (11–14) und die Ausgänge des Bildwiederholspeichers (1) über Torschaltungen ($U_{11}$–$U_{24}$) mit dem Eingang des Farbumsetzers (2) verbunden sind,

- ein Gerät (15) zur freien Vorgabe von Koordinaten auf dem Monitor (6)

- einem mit dem Taktgeber (7) verbundenen Bildpunktzähler (8), durch den die Bildsignale innerhalb der einzelnen Zeilen gezählt werden,

- einem Zeilenzähler (9), der mit dem Taktgenerator (7) verbunden ist, durch den die Zeilen jedes Einzelbildes gezählt werden,

– und aus einem Steuerwerk (10), das mit einem Rechner (16), durch den das Steuerwerk geladen wird, mit den Torschaltungen ($U_{11}$–$U_{24}$), dem Bildpunktzähler (8), dem Zeilenzähler (9) sowie über den Rechner (16) mit dem Gerät zur Koordinatenvorgabe (15), dem Farbumsetzer (2) und einer Eingabeeinheit (17) verbunden ist, wobei das Steuerwerk (10) aus der jeweiligen Koordinate des Gerätes zur Koordinatenvorgabe und den beiden Zählern (8, 9) Steuersignale für die Torschaltung ($U_{11}$–$U_{24}$) erzeugt, welche durch Umschalten vom Bildwiederholspeicher (1) auf die Farbspeicher (11–14) bzw. umgekehrt bestimmen, dass in einem Bereich, um die jeweils vom Koordinaten-Erfassungsgerät aufgerufene Koordinate anstelle der Ausgangssignale des Bildwiederholspeichers (1), die in den Farbspeichern (11–14) eingegebene Referenzfarbe von der Torschaltung ($U_{11}$–$U_{24}$) an den Farbumsetzer (2) geschaltet wird.

2. Einrichtung nach Anspruch 1, dadurch gekennzeichnet, dass die Farbspeicher (11–14) mit dem Rechner (16) verbunden sind, wobei die Referenzfarben sowie Grösse und Form des Referenzfeldes von der Eingabeeinrichtung (17) in den Rechner gegeben und die Farbspeicher (11–14) vom Rechner (16) geladen werden.

3. Einrichtung nach Anspruch 1 oder 2, gekennzeichnet durch ihre Verwendung in Verbindung mit einer Farbkorrektur-Einrichtung zur Kontrolle der Farbkorrektur bzw. zur Vorgabe der Farbkorrektur vorgegebener Farben.

4. Einrichtung nach einem der Ansprüche 1–3, dadurch gekennzeichnet, dass eine frei auf dem Monitorbildschirm (6) bewegliche Messmarke vorgesehen ist und dass die jeweilige Referenzfarbe der Farbspeicher (11–14) auf die durch die Farbmessmarke ermittelten Farbwerte einstellbar ist.

## Revendications

1. Dispositif permettant de contrôler ou de corriger, sur un récepteur de contrôle de couleur (6), une image en couleur à imprimer, dispositif constitué:

– d'une mémoire de répétition d'image (1) contenant les signaux de couleurs d'impression V, M, C, K de l'image à représenter, pour permettre d'obtenir une image stationnaire sur un récepteur de contrôle (6),

– d'un convertisseur de couleurs (2), branché entre la mémoire de répétition d'image (1) et le récepteur de contrôle (6), pour convertir les quatre signaux de couleurs d'impression V, M, C, K en trois signaux de couleurs R, G, B pour commander le récepteur de contrôle (6),

– d'un émetteur d'impulsions (7) pour obtenir des signaux de lecture pour la mémoire de répétition d'image (1) et des signaux pour synchroniser la mémoire de répétition d'image (1), le convertisseur de couleurs (2) et le récepteur de contrôle (6),

– de mémoires de couleurs (11 à 14) dans lesquelles peuvent être introduites en tant que couleurs de référence, des couleurs d'impression susceptibles d'être librement sélectionnées, les mémoires de couleurs (11 à 14) et les sorties de la mémoire de répétition d'image (1) étant reliées, par l'intermédiaire de circuits de portes ($U_{11}$ à $U_{24}$) à l'entrée du convertisseur de couleurs (2),

– d'un appareil pour entrer des coordonnées (15) pour permettre de prédéfinir librement des coordonnées sur le récepteur de contrôle (6),

– d'un compteur de points d'image (8), relié à l'émetteur d'impulsions (7), et grâce auquel les signaux d'image sont comptés à l'intérieur des différentes lignes,

– d'un compteur de lignes (9), relié au générateur d'impulsions (7) et grâce auquel sont comptées les lignes de chaque image individuelle,

– et d'une unité de commande (10) qui est reliée à un calculateur (16), par l'intermédiaire duquel cette unité de commande est chargée, cette unité étant également reliée aux circuits de portes ($U_{11}$ à $U_{24}$), au compteur de points d'image (8), au compteur de lignes (9), ainsi que, par l'intermédiaire du calculateur (16), à l'appareil (15) permettant de prédéfinir les coordonnées, au convertisseur de couleurs (2) et à une unité d'introduction (17), l'unité de commande (10), à partir des coordonnées correspondantes de l'appareil permettant de prédéfinir les coordonnées des deux compteurs (8, 9), émet des signaux de commande pour les circuits de portes ($U_{11}$ à $U_{24}$), lesquels, par commutation de la mémoire de répétition d'image (1) sur les mémoires de couleurs (11 à 14) ou inversement, détermine que, dans une zone autour des coordonnées respectivement appelées par l'appareil de détection des coordonnées, au lieu des signaux de sortie de la mémoire de répétition d'image (1), la couleur de référence introduite dans les mémoires de couleurs (11 à 14) est branchée par les circuits de portes ($U_{11}$ à $U_{24}$) sur le convertisseur de couleur (2).

2. Dispositif selon la revendication 1, caractérisé en se que les mémoires de couleurs (11 à 14) sont reliées au calculateur (16), les couleurs de référence ainsi que les dimensions et la forme du champ de référence étant introduites dans le calculateur par l'unité d'introduction (17) et les mémoires de couleurs (11 à 14) étant chargées par le calculateur (16).

3. Dispositif selon la revendication 1 ou 2, caractérisé en ce qu'il est mis en œuvre, en combinaison avec un dispositif de correction de couleurs permettant de contrôler la correction de couleur ou bien de prédéfinir la correction de couleur, de couleurs prédéfinies.

4. Dispositif selon une des revendications 1 à 3, caractérisé en ce qu'il est prévu un repère de mesure librement mobile sur l'écran du récepteur de contrôle (6), et que la couleur de référence respective de la mémoire de couleurs (11 à 14) est susceptible d'être mise en place sur les valeurs de couleurs déterminées par le repère de mesure.

## Claims

1. Apparatus for controlling or correcting a colour image, which is to be printed, on a colour monitor (6), comprising:

– an image refresh memory (1) containing print colour signals Y, M, C, K of the image which is to be depicted, to produce a static picture on a monitor (6),

– a colour converter (2), which is connected between the image refresh memory (1) and the monitor (6), for converting the four print colour signals Y, M, C, K into three colour signals R, G, B for feeding the monitor (6),

– a timer (7) for generating read signals for the image refresh memory (1) and signals for synchronising the image refresh memory (1), the colour converter (2) and the monitor (6),

– colour memories (11–14), into which freely selectible printing colours are fed as reference colours, the colour memories (11–14) and the outputs of the image refresh memory (1) being connected to the input of the colour converter (2) via gate circuits ($U_{11}$–$U_{24}$),

– a device (15) for optional presetting of coordinates on the monitor (6),

– an image dot counter (8) connected to the timer (7), via which the image signals within separate lines are counted,

– a line counter (9), which is connected to the timer (7), via which the lines of each separate image are counted,

– and a control unit (10) which is connected to a computer (16), via which the control unit is loaded, to the gate circuits ($U_{11}$–$U_{24}$), the image dot counter (8), the line counter (9), as well as via the computer (16) to the device for co-ordinate presetting (15), to the colour converter (2) and to an input unit (17), whereby the control unit (10) produces from the respective co-ordinate of the co-ordinate presetting device and the two counters (8, 9) control signals for the gate circuit ($U_{11}$–$U_{24}$) which, by switching from the image refresh memory (1) to the colour memories (11–14) or vice versa, determines that within a range around the co-ordinate addressed in each case by the co-ordinate determining device, a given reference colour in the colour memories is conveyed by the gate circuit ($U_{11}$–$U_{24}$) to the colour converter (2), instead of the output signals of the image refresh memory (1).

2. Apparatus according to claim 1, characterised in that the colour memories (11–14) are connected to the computer (16), whereby the reference colours as well as the size and form of the reference field, are fed into the computer (16) by the input unit (17) and the colour memories (11–14) are loaded by the computer (16).

3. Apparatus according to claim 1 or 2, characterised by its application in combination with a colour correction apparatus for controlling the colour correction or for presetting the colour correction desired colours.

4. Apparatus according to one of the claims 1–3, characterised in that a measurement mark freely displaceable on the monitor screen (6) is provided, and that the respective reference colour of the colour memories (11–14) is adjustable to the colour values determined by the colour measurement mark.

Fig. 1

Fig. 2

0 140 071

1/4

2/4

Fig. 3

Bildpunkttakt

8

Bildpunktzähler

$2^0$
$2^1$
$2^2$
$2^3$

9

Zeilentakt

Zeilenzähler

$2^0$
$2^1$
$2^2$
$2^3$

94
95
96
97
98
99

10

RAM-
Steuerwerk

101
100

A

$\bar{A}$

S R    S R

FF    FF    92

91

93

L= Aus
H = Ein

**Fig. 4**

$2^0$

Adresse

$2^5$

Speicher
8 × 8

A

$\bar{A}$

Lesen    Schreiben

**Fig. 6**

| Adresse | | Ausgang |
|---|---|---|
| | **Binär** | |
| Dezimal | $2^5$ $2^4$ $2^3$ $2^2$ $2^1$ $2^0$ | A |
| 0 | L L L L L L | L |
| 1 | L L L L L H | L |
| 2 | L L L L H L | L |
| 3 | L L L L H H | L |
| ⋮ | ⋮ | ⋮ |
| 7 | L L L H H H | L |
| 8 | L L H L L L | L |
| ⋮ | ⋮ | ⋮ |
| 15 | L L H H H H | L |
| 16 | L H L L L L | L |
| 17 | L H L L L H | L |
| 18 | L H L L H L | H |
| 19 | L H L L H H | H |
| 20 | L H L H L L | H |
| 21 | L H L H L H | H |
| 22 | L H L H H L | L |
| 23 | L H L H H H | L |
| ⋮ | ⋮ | ⋮ |
| 63 | H H H H H H | L |

| | 0 | 1 | 2 | 3 | 4 | 5 | 6 | 7 |
|---|---|---|---|---|---|---|---|---|
| 0 - 7 | L | L | L | L | L | L | L | L |
| 8 - 15 | L | L | L | L | L | L | L | L |
| 16 - 23 | L | L | H | H | H | H | L | L |
| 24 - 31 | L | L | H | H | H | H | L | L |
| 32 - 39 | L | L | H | H | H | H | L | L |
| 40 - 47 | L | L | H | H | H | H | L | L |
| 48 - 55 | L | L | L | L | L | L | L | L |
| 56 - 63 | L | L | L | L | L | L | L | L |

*Referenzfarbfeld*

**Fig. 5**

**Fig. 7**

15